# DEMANDE DE BREVET EUROPEEN

(11) **EP 0 668 018 A1**
(43) Date de publication de la demande: **23.08.1995**
(21) Numéro de dépôt: 95460008.6
(22) Date de dépôt: 20.02.1995
(51) Int. Cl.: A22B 5/00, A22B 7/00

(54) **Dispositif pour poste de sciage dans une chaine de découpe primaire d'animaux de boucherie**

(30) Priorité: 23.02.1994 FR 9402305
(71) Demandeur: COUEDIC MADORE EQUIPEMENT (SARL), F-22600 Loudeac (FR)
(72) Inventeur: Couedic, Bernard, F-22600 Loudeac (FR); Madore, Jean, F-22210 Plemet (FR); Le Maux, Robert, F-22600 Loudeac (FR)
(74) Mandataire: Dubreuil, Annie

(57) **Abrégé**

Ce dispositif est destiné à procurer un appui le long d'un poste de sciage pour des demi-carcasses (D) avançant suspendues à un convoyeur aérien (C), afin que le sciage puisse être effectué en vertical et en continu.

Il comprend une chaîne sans fin (3) définissant un brin longitudinal aller (30), lequel est placé parallèlement et de côté par rapport au convoyeur aérien (C), et défile à la même vitesse et dans le même sens que ce dernier. Un ensemble de palettes allongées (2) sont montées à se suivre, articulées par leur extrémité supérieure à la chaîne (3).

Un moyen commande les palettes (2) en inclinaison afin qu'elles prennent en appui les demi-carcasses (D) du fait de s'élever progressivement le long d'un premier tronçon du brin aller (30), puis conservent une inclinaison d'appui sur un deuxième tronçon, et se rabaissent sur un troisième tronçon pour libérer progressivement les demi-carcasses (D).

## Description

La présente invention concerne la découpe primaire d'animaux de boucherie, soit l'opération par laquelle des carcasses préalablement fendues en deux longitudinalement sont débitées en pièces telles que jambon, poitrine, longe, épaule...

Plus précisément, la découpe primaire réalisée sur des demi-carcasses comporte une première étape consistant en un sciage de parties osseuses sans séparation des diverses pièces, cette séparation étant effectuée par découpe des parties charnues au couteau dans une seconde étape.

Dans les installations modernes, pour des raisons de cadence, les deux tâches ci-dessus mentionnées n'ont pas lieu à poste fixe, mais pendant le déplacement en continu des demi-carcasses le long d'une chaîne : les demi-carcasses transportées suspendues à un convoyeur aérien arrivent à l'entrée d'un convoyeur horizontal de découpe où elles sont affalées sur le flanc. Un scieur, ou plus souvent deux placés à la suite l'un de l'autre opèrent sur le convoyeur de découpe, en amont des découpeurs travaillant au couteau. Généralement, le convoyeur de découpe est suffisamment large pour admettre deux files de demi-carcasses droites et gauches en parallèle.

Si la découpe au couteau semble s'imposer logiquement en tant que travail sur un plan horizontal, il n'en est pas de même du sciage pour lequel il apparaît plus ergonomique de travailler en vertical avec des outils suspendus : le fait d'opérer devant soi permet une meilleure appréciation des actions à effectuer, tout en offrant plus de latitude et de précision dans les gestes ; d'autre part, il est aisé pour chacun des scieurs de régler au mieux sa hauteur de travail.

Mais bien entendu, si une telle amélioration ergonomique peut laisser envisager des gains de cadence, encore faut-il que le sciage en vertical puisse se faire en continu comme le sciage à plat, c'est-à-dire pendant le déplacement des demi-carcasses le long de la chaîne de découpe, ce qui implique qu'elles soient correctement assujetties sur le trajet de la chaîne correspondant à la longueur du poste de sciage. Il faut, de plus, que soient respectées les règles d'hygiène, dont celle d'éviter le contact et la transmission de germes entre carcasses.

C'est dans ce contexte qu'a été conçue l'invention, qui consiste en un dispositif simple destiné à procurer un appui le long d'un poste de sciage dans une chaîne de découpe primaire, pour des demi-carcasses avançant suspendues à un convoyeur aérien.

Plus précisément, ce dispositif associé à un convoyeur aérien, est caractérisé en ce qu'il comprend :
une boucle sans fin, chaîne ou analogue, définissant un brin longitudinal aller placé parallèlement et de côté par rapport au convoyeur aérien, lequel brin longitudinal aller défile à la même vitesse et dans le même sens que ledit convoyeur aérien,
un ensemble de palettes allongées montées les unes à la suite des autres suspendues par une de leurs extrémités à ladite boucle sans fin, par l'intermédiaire d'articulations leur conférant une aptitude de pivotement perpendiculairement à ladite boucle sans fin,
et un moyen pour commander les palettes en inclinaison vers ledit convoyeur aérien le long dudit brin aller, afin que les palettes prennent en appui les demi-carcasses transportées par le convoyeur aérien du fait de s'élever progressivement le long d'un premier tronçon du brin aller, puis conservent une inclinaison d'appui sur un deuxième tronçon du brin aller, et se rabaissent sur un troisième tronçon du brin aller pour libérer progressivement lesdites demi-carcasses.

Sur la longueur du deuxième tronçon du brin aller, les palettes forment donc un plan de travail pour les scieurs, plan sur lequel les demi-carcasses sont parfaitement immobilisées. Au besoin, ce plan peut être dédoublé en deux plan différemment inclinés, pour autant que la tâche de chaque opérateur s'en trouve facilitée. En dehors du brin aller, les palettes sont en position sensiblement verticale, position qui se prête particulièrement bien à un nettoyage efficace. Ce nettoyage comprend avantageusement un brossage, par exemple au moyen d'une ou plusieurs brosses rotatives disposées verticalement sur le trajet des palettes.

Dans une forme de réalisation, le moyen pour commander l'inclinaison des palettes est un guide continu le long dudit brin aller, sur lequel repose et glisse la partie inférieure des palettes.

Ces caractéristiques et avantages de l'invention, ainsi que d'autres, apparaîtront plus clairement à la lecture de la description suivante, faite en relation avec les dessins joints, dans lesquels :
la Fig.1 est une vue schématique de côté d'un dispositif selon l'invention,
la Fig. 2 est une vue schématique de dessus du dispositif de la Fig. 1,
la Fig. 3 est une vue schématique en coupe selon la ligne III-III de la Fig. 1, illustrant le dispositif dans sa relation avec un convoyeur aérien de demi-carcasses et dans son fonctionnement,
la Fig. 4 est une vue partielle en coupe selon la ligne IV-IV de la Fig. 2, montrant dans le détail les éléments supérieurs du dispositif, et notamment le montage de la chaîne sans fin et des palettes, et
la Fig. 5 est une vue représentant l'articulation des palettes.

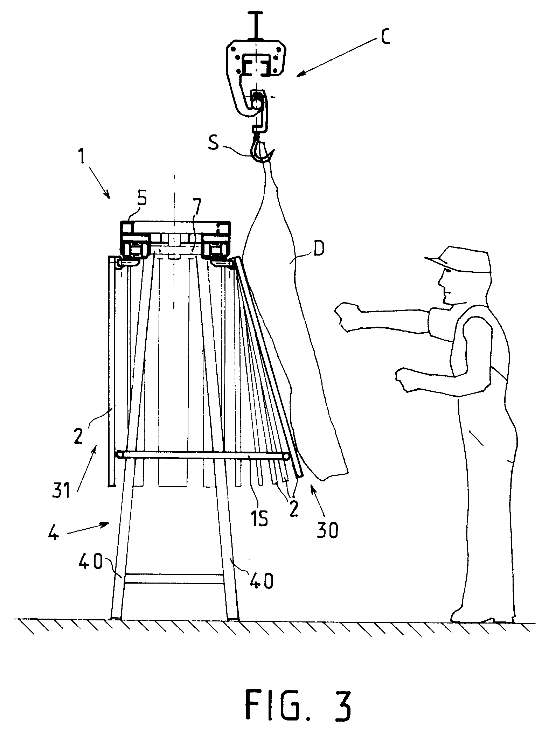

Le dispositif conforme à l'invention, désigné dans son ensemble par le repère 1 dans les dessins, s'utilise en association avec un convoyeur aérien C , Fig. 3, qui transporte des pièces telles que demi-carcasses de porc à découper, selon un pas d'écartement et une vitesse déterminés. Le dispositif 1 est placé sous le convoyeur C, et décalé comme il convient sur un côté. Il a pour fonction de constituer un plan d'appui pour les demi-carcasses transportées par le convoyeur C sur la longueur d'un poste de sciage, en aval duquel les demi-carcasses sont ensuite affalées sur un convoyeur horizontal, non représenté ici, où a lieu la découpe proprement dite au couteau, comme exposé précédemment.

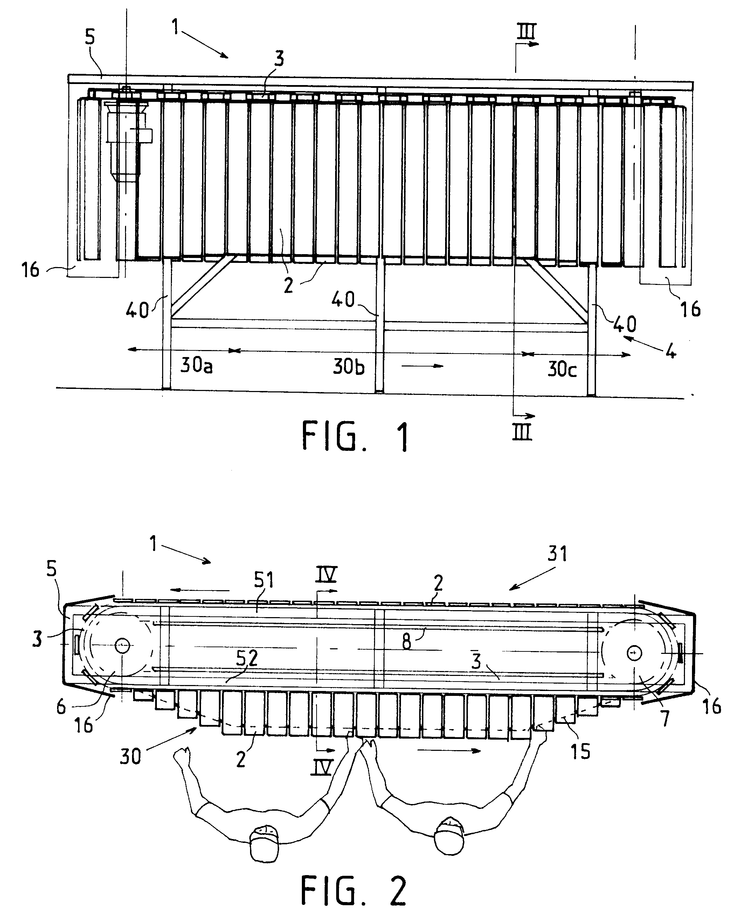

Selon l'invention, le plan d'appui du dispositif 1 est réalisé par un ensemble de palettes 2 qui se suivent, articulées autour de leur extrémité supérieure à une boucle sans fin constituée d'une chaîne 3 formant un brin aller rectiligne 30 qui va être placé parallèlement au convoyeur C, et défiler dans le même sens et à la même vitesse que ce dernier. Les palettes 2 qui arrivent sensiblement verticales à l'extrémité amont du brin 30 vont progressivement s'élever par pivotement le long d'un premier tronçon 30a, Fig. 1, en s'engageant ainsi dans le passage des demi-carcasses D, Fig. 3. Par conséquent, chaque demi-carcasse D arrivant au niveau du dispositif 1 va rencontrer en premier lieu la base de palettes 2 qui vont l'accompagner dès lors dans son déplacement. Ce faisant, les palettes qui s'élèvent le long du tronçon 30a vont repousser vers le côté opposé la demi-carcasse D, en la faisant s'incliner transversalement autour de son crochet de suspension S jusqu'à ce qu'elle soit en appui sur elles comme représenté à la Fig. 3. Cet appui est maintenu le long d'un tronçon intermédiaire 30b du brin 30 dont la longueur correspond au poste de sciage. Ensuite, en se rabaissant vers la position verticale le long du dernier tronçon 30c du brin aller 30, les palettes libèrent progressivement la demi-carcasse D qui continue sa progression jusqu'à un poste d'affalage, non représenté.

Les palettes 2 sont des lames rectangulaires allongées, avantageusement fabriquées en une matière synthétique de qualité alimentaire telle que polyéthylène. Sur le tronçon 30b du brin aller le long du poste de sciage, elles se suivent de façon quasi jointive, de manière à former un plan de travail sans discontinuités importantes.

La chaîne sans fin 3 est portée au sommet d'un bâti 4 en forme générale de portique, dont les éléments sont de préférence en acier inoxydable. Tel que représenté, le bâti 4 comprend deux paires d'extrémité et une paire médiane de pieds inclinés 40 réunis par des éléments transversaux et longitudinaux, portant un longeron 42, lequel porte à son tour, par l'intermédiaire de montants 43 et de traverses 44 un cadre supérieur rectangulaire 5 disposé horizontalement.

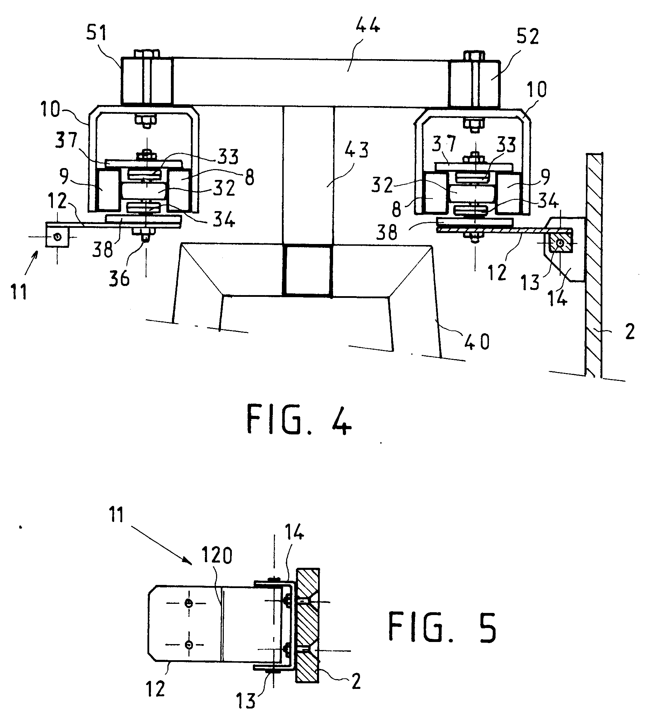

Aux extrémités du cadre 5, sont montées horizontalement deux roues dentées 6, 7 dont l'une est motrice, sur lesquelles la chaîne sans fin 3 est engagée et maintenue en tension par un moyen classique. Entre les roues 6 et 7, la chaîne 3 qui comporte des galets de roulement 32, est retenue et guidée en deux brins rectilignes dont le brin aller 30 et un brin de retour 31, dans des chemins suspendus sous les deux longerons latéraux du cadre 5, respectivement 51 et 52, Fig. 4.

Chacun de ces chemins est constitué par deux rails tubulaires parallèles identiques de section rectangulaire, soit un rail intérieur 8 et un rail extérieur 9 disposés au même niveau et écartés d'une distance correspondant au diamètre des galets 32 de la chaîne 3. Les rails 8 et 9 sont fixés sous chaque longeron 51 et 52 par l'intermédiaire d'étriers 10.

La chaîne 3 est retenue à l'intérieur des rails 8 et 9 et, à cet effet, elle est pourvue de patins de glissement supérieurs 37 et inférieurs 38 arrangés en paires. Dans chaque paire, le patin supérieur 37 et le patin inférieur 38 sont respectivement placés extérieurement par rapport à la maille supérieure 33 et à la maille inférieure 34 d'un même maillon dans le sens vertical, et parallèlement à celles-ci. Les patins 37, 38 sont par exemple fixés à leur maille respective en deux points tels que 36 écartés sur l'axe longitudinal de ces dernières. Dans une forme de réalisation satisfaisante, les paires de patins 37, 38 se répètent à raison d'une tous les deux maillons.

Les patins 37, 38 viennent coiffer supérieurement et inférieurement les deux rails 8, 9, en débordement de la chaîne 3. Leur écartement n'étant que très légèrement inférieur à la hauteur des rails 8, 9, en plus de retenir la chaîne à l'intérieur de ces derniers, ils assurent son maintien transversal en position sensiblement horizontale. Les patins 37, 38 sont avantageusement fabriqués en une matière synthétique telle que polyamide, retenue pour ses qualités de glissement sur des surfaces métalliques.

Les palettes 2 qui ont une largeur très légèrement inférieure au pas de la chaîne 3 sont chacune reliée à un maillon par une articulation 11. Côté chaîne, l'articulation 11 comprend une plaquette 12 montée solidaire de la maille inférieure 34 du maillon, et qui s'étend extérieurement au-delà du rail extérieur 9. Au niveau des maillons pourvus de patins de glissement, la plaquette 12 est placée sous le patin inférieur 38, Fig. 4, montée avec lui sous la maille 34 au moyen des fixations 36. Au niveau des autres maillons, la plaquette 12 peut être montée directement sous la maille 34. Pour le rattrapage de l'épaisseur du patin 38 qui est alors nécessaire, elle peut être prévue avec un décrochement, représenté en 120 à la Fig. 5. Sous son bord extérieur, la plaquette 12 porte un axe 13 parallèlement à l'axe longitudinal du maillon. La palette 2 est montée pivotante autour de cet axe par l'intermédiaire d'une chape 14 fixée à son extrémité supérieure.

Selon l'invention, les palettes 2 sont commandées en inclinaison le long du brin aller 30. Comme déjà exposé précédemment, à partir d'une position sensiblement verticale, les palettes 2 s'élèvent tout d'abord progressivement sur un premier tronçon 30a, sont maintenues dans une inclinaison déterminée le long d'un tronçon intermédiaire 30b, puis se rabaissent progressivement sur un dernier tronçon 30c. Eventuellement, le tronçon intermédiaire 30b se subdivise lui-même en deux parties entre lesquelles l'inclinaison des palettes va varier progressivement, le long d'un tronçon de transition.

Dans les dessins, le moyen représenté pour commander les palettes 2 en inclinaison est un guide continu tout au long du brin aller 30, formant une rampe de glissement sur laquelle s'appuie leur partie inférieure. Il s'agit avantageusement d'une barre ronde 15, Fig. 3, dont la forme en plan est représentée en traits interrompus à la Fig. 2. Avantageusement, le guide 15 peut être prolongé tout autour du dispositif, pour empêcher les palettes 2 de pivoter vers l'intérieur.

Entre deux passages sur le brin aller 30, les palettes 2 peuvent subir un nettoyage le long du brin de retour 31, nettoyage pouvant comprendre un brossage, par exemple au moyen de brosses rotatives axées verticalement, un lavage avec aspersion d'un agent détergent, et un rinçage. On notera que lorsqu'elles passent autour des roues dentées 6, 7, les palettes 2 sont en situation propice pour le nettoyage de leurs bords adjacents, du fait de s'écarter entre elles.

Pour cette même raison, elles peuvent constituer un danger de pincement lorsqu'elles se referment les unes contre les autres. Pour pallier ce danger, on peut prévoir des capots de protection 16, Figs. 1 et 2, enveloppant les extrémités du dispositif.

## Revendications

**1)** Dispositif destiné à procurer un appui le long d'un poste de sciage dans une chaîne de découpe primaire, pour des demi-carcasses (D) avançant suspendues à un convoyeur aérien (C), caractérisé en ce qu'il comprend :
une boucle sans fin (3), chaîne ou analogue, définissant un brin longitudinal aller (30) placé parallèlement et de côté par rapport au convoyeur aérien (C), lequel brin aller (30) défile à la même vitesse et dans le même sens que le convoyeur aérien (C),
un ensemble de palettes allongées (2) montées les unes à la suite des autres suspendues par une de leur extrémités à la boucle sans fin (3), par l'intermédiaire d'articulations (11) leur conférant une aptitude de pivotement perpendiculairement à la boucle sans fin (3),
et un moyen pour commander les palettes (2) en inclinaison vers ledit convoyeur aérien (C) le long dudit brin aller (30), afin que les palettes (2) prennent en appui les demi-carcasses (D) transportées par le convoyeur (C), du fait de s'élever progressivement le long d'un premier tronçon (30a) du brin aller (30), puis conservent une inclinaison d'appui déterminée sur un deuxième tronçon (30b) du brin aller (30), et se rabaissent sur un troisième tronçon (30c) du brin aller (30) pour libérer progressivement lesdites demi-carcasses (D).

**2)** Dispositif selon la revendication 1, caractérisé en ce que ledit moyen pour commander les palettes (2) en inclinaison le long du brin aller (30) est un guide (15) continu tout au long de ce dernier, formant une rampe de glissement sur laquelle s'appuie la partie inférieure desdites palettes.

**3)** Dispositif selon la revendication 2, caractérisé en ce que le guide (15) se prolonge sur la totalité de son pourtour.

**4)** Dispositif selon l'une des revendications 1 à 3, caractérisé en ce qu'il est prévu des moyens pour nettoyer les palettes (2) entre deux passages sur le brin aller (30).

**5)** Dispositif selon la revendication 4, caractérisé en ce que les moyens de nettoyage des palettes comprennent au moins une brosse rotative à axe vertical disposée le long du brin de retour (31).

**6)** Dispositif selon l'une des revendications 1 à 5, caractérisé en ce qu'il comporte des capots de protection (16) enveloppant ses extrémités.
